(19) Europäisches Patentamt
European Patent Office
Office européen des brevets

(11) EP 2 722 356 A2

(12) **EUROPEAN PATENT APPLICATION**
published in accordance with Art. 153(4) EPC

(43) Date of publication:
**23.04.2014 Bulletin 2014/17**

(21) Application number: **12802738.0**

(22) Date of filing: **20.06.2012**

(51) Int Cl.:
***C08J 5/18*** *(2006.01)* ***C08K 5/22*** *(2006.01)*
***C08K 5/32*** *(2006.01)* ***C08L 1/12*** *(2006.01)*
***G02B 1/04*** *(2006.01)*

(86) International application number:
**PCT/KR2012/004870**

(87) International publication number:
**WO 2012/177044 (27.12.2012 Gazette 2012/52)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **20.06.2011 KR 20110059697**
**19.06.2012 KR 20120065600**

(71) Applicant: **SK Innovation Co., Ltd.**
**Seoul 110-110 (KR)**

(72) Inventors:
- **KIM, Won Yeob**
**Daejeon 302-772 (KR)**
- **IM, Min Joung**
**Busan 614-010 (KR)**
- **LEE, Seung Eon**
**Daejeon 305-712 (KR)**
- **KWAK, Hyo Shin**
**Daejeon 305-746 (KR)**
- **KIM, Myoung Lae**
**Daejeon 305-313 (KR)**
- **CHO, Yong Gyun**
**Daejeon 305-707 (KR)**

(74) Representative: **Stolmár & Partner**
**Blumenstraße 17**
**80331 München (DE)**

# (54) OPTICAL FILM

(57) The present invention relates to a cellulose acetate film for optical compensation and a retardation enhancer used therein, and relates to a cellulose acetate film which has a high retardation value in the thickness direction (Rth).

EP 2 722 356 A2

## Description

[Technical Field]

The present invention relates to an optical film used for optical compensation, and more particularly to a cellulose acetate film having high retardation in a thickness direction (Rth).

Also, the present invention relates to an optical compensation sheet, a polarizing plate, an optical filter for a three dimensional image, and a liquid crystal display, using the optical film.

[Background Art]

A cellulose acetate film has high strength and flame retardancy, and thus, is used in various kinds of photographs or optical materials. The cellulose acetate film has a low optical anisotropy as compared with other polymer films, and thus provides relatively low retardation. Therefore, the cellulose acetate film has been used in a polarizing plate and the like.

US Patent Laid-Open Publication No. 2008/0173215 discloses a cellulose acetate film having excellent light resistance, and Korean Patent Laid-Open Publication No. 2011-0075980 discloses a cellulose acetate film including a retardation improver.

In a vertical alignment (VA) mode, transparent electrodes are formed on upper and lower plates. Polarizing plates are attached on outside surfaces of the upper and lower plates perpendicularly to optical axe, and thus, when an electric field is not applied, initial alignment directions are perpendicular thereto resulting in completely dark state, and when the electric field is applied, liquid crystal directors are appropriately rearranged allowing light to transmit therethrough. The optical compensation film of this VA mode liquid crystal display requires a high optical anisotropy, that is, high retardation.

Meanwhile, US Patent Laid-Open Publication No. 2010/0208181 discloses a cellulose acetate film containing a compound enabling a high contrast even at a wide viewing angle in a VA mode, but still requires a cellulose acetate film having excellent optical characteristics.

[Disclosure of Invention]

[Technical Problem]

An object of the present invention is to provide an optical film having a high retardation value in a thickness direction. More specifically, an object of the present invention is to provide an optical film, capable of being used in a VA mode liquid crystal display and improving viewing angle and contrast characteristics of a VA mode LCD panel.

Another object of the present invention is to provide a retardation additive for satisfying these optical characteristics.

Still another object of the present invention is to provide an optical compensation sheet, an optical filter for a three dimensional image, a polarizing plate, and a liquid crystal display, using the optical film.

[Technical Solution]

In one general aspect, an optical film includes at least one retardation additive selected from the compounds of Chemical Formula 1 below.

[Chemical Formula 1]

$$Ar-\left[Q\right]_m$$

In Chemical Formula 1,

Ar is ($C_6$-$C_{20}$)aryl or ($C_3$-$C_{20}$)heteroaryl, provided that the compound in which OR (wherein R is hydrogen or ($C_1$-$C_{20}$)alkyl) is substituted in ortho position of Q is excluded;

Q is

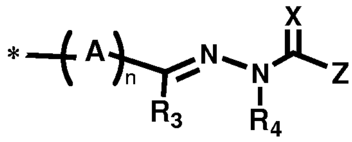

;

A is

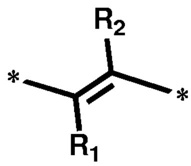

or

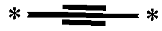

,

and $R_1$ and $R_2$ each are independently hydrogen, halogen, hydroxy, $(C_1\text{-}C_{20})$alkyl, or $(C_3\text{-}C_{20})$heterocycloalkyl;

$R_3$ is hydrogen, halogen, hydroxy, $(C_1\text{-}C_{20})$alkyl, $(C_1\text{-}C_{20})$alkylcarbonyl, $(C_6\text{-}C_{20})$aryl, $(C_3\text{-}C_{20})$heteroaryl, or $(C_3\text{-}C_{20})$heterocycloalkyl; $R_3$ and a substituent of Ar may be linked to each other via substituted or unsubstituted $(C_3\text{-}C_{20})$alkylene or substituted or unsubstituted $(C_3\text{-}C_{20})$alkenylene, containing or not containing a fusion ring, to thereby form an alicyclic ring, or a monocyclic or polycyclic aromatic ring; and the carbon atom of the said alicyclic ring, or the said monocyclic or polycyclic aromatic ring may be substituted by at least one heteroatom selected from N, O, and S;

$R_4$ is hydrogen or $(C_1\text{-}C_{20})$alkyl;

X is O or S;

Z is $(C_1\text{-}C_{20})$alkyl, $-N(R_{11}R_{12})$, or $-O(R_{13})$; $R_{11}$ to $R_{13}$ each are independently of one another selected from hydrogen and $(C_1\text{-}C_{20})$alkyl; and $R_{11}$ and $R_{12}$ may be linked to each other via substituted or unsubstituted $(C_3\text{-}C_{20})$alkylene or substituted or unsubstituted $(C_3\text{-}C_{20})$alkenylene, containing or not containing a fusion ring, to thereby form an alicyclic ring, or a monocyclic or polycyclic aromatic ring; and the carbon atom of the said alicyclic ring, or the said monocyclic or polycyclic aromatic ring may be substituted by at least one heteroatom selected from N, O, and S;

n is an integer of 0 to 3;

m is an integer of 1 to 10; and

aforementioned alkyl and heterocycloalkyl of $R_1$ to $R_3$, alkyl of $R_4$, alkyl of Z, alkyl of $R_{11}$ to $R_{13}$, and the alicyclic ring or aromatic ring of Z and $R_3$ each may be independently of one another further substituted with at least one selected from the group consisting of halogen, nitro, cyano, hydroxy, amino, $(C_1\text{-}C_{20})$alkyl, $(C_1\text{-}C_{20})$alkoxy, $(C_2\text{-}C_{20})$alkenyl, $(C_3\text{-}C_{20})$cycloalkyl, and 5- to 7- membered heterocycloalkyl containing at least one element selected from N, O, and S.

In above Chemical Formula 1 according to one embodiment of the present invention, Ar may be further substituted with at least one selected from the group consisting of halogen, $(C_1\text{-}C_{20})$alkyl, $(C_3\text{-}C_{20})$cycloalkyl, $(C_1\text{-}C_{20})$alkoxy, $(C_6\text{-}C_{20})$aryloxy, $(C_1\text{-}C_{20})$alkylacyl, $(C_6\text{-}C_{20})$arylacyl, $(C_1\text{-}C_{20})$alkoxycarbonyl, $(C_6\text{-}C_{20})$aryloxycarbonyl, $(C_1\text{-}C_{20})$alkylacyloxy, $(C_6\text{-}C_{20})$arylacyloxy, sulfonylamino, nitro, hydroxy, cyano, amino, acylamino, Q, and 5- to 7-membered heterocycloalkyl containing at least one element selected from N, O, and S;

$R_1$ and $R_2$ each are independently hydrogen;

$R_3$ is hydrogen, $(C_1\text{-}C_{20})$alkyl, or $(C_1\text{-}C_{20})$alkylcarbonyl;

$R_4$ is hydrogen or $(C_1\text{-}C_{20})$alkyl;

X i s O or S;

Z is $(C_1\text{-}C_{20})$ alkyl, $-N(R_{11}R_{12})$, or $-O(R_{13})$; $R_{11}$ to $R_{13}$ each are independently of one another selected from hydrogen and $(C_1\text{-}C_{20})$alkyl; and $R_{11}$ and $R_{12}$ may be linked to each other via substituted or unsubstituted $(C_3\text{-}C_{20})$alkylene or substituted or unsubstituted $(C_3\text{-}C_{20})$alkenylene, containing or not containing a fusion ring, to thereby form an alicyclic ring, or a monocyclic or polycyclic aromatic ring; and the carbon atom of the said alicyclic ring, or the said monocyclic or polycyclic aromatic ring may be substituted by at least one heteroatom selected from N, O, and S;

n is an integer of 0 to 3; and

aforementioned alkyl and heterocycloalkyl of $R_1$ to $R_3$, alkyl of $R_4$, alkyl of Z, and alkyl of $R_{11}$ to $R_{13}$ each may be independently of one another further substituted with at least one selected from the group consisting of halogen, nitro, cyano, hydroxy, amino, $(C_1\text{-}C_{20})$alkyl, $(C_1\text{-}C_{20})$alkoxy, $(C_2\text{-}C_{20})$alkenyl, $(C_3\text{-}C_{20})$cycloalkyl, and 5- to 7- membered heterocycloalkyl containing at least one element selected from N, O, and S.

The compound of Chemical Formula 1 may be represented by any one of Chemical Formulas 2 to 5 below.

[Chemical Formula 2]

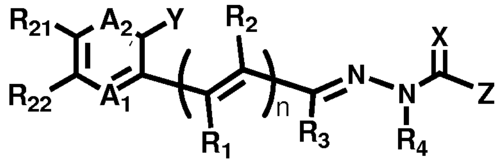

[Chemical Formula 3]

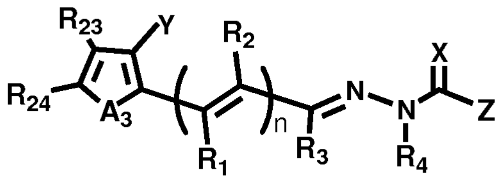

[Chemical Formula 4]

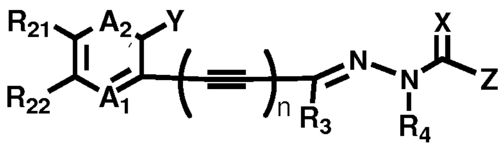

[Chemical Formula 5]

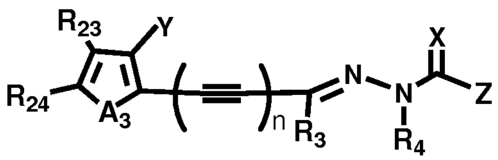

In Chemical Formulas 2 to 5,

$R_1$ and $R_2$ each are independently hydrogen, halogen, hydroxy, $(C_1\text{-}C_{20})$alkyl, or $(C_3\text{-}C_{20})$heterocycloalkyl;
$R_3$ is hydrogen, halogen, hydroxy, $(C_1\text{-}C_{20})$alkyl, or $(C_3\text{-}C_{20})$heterocycloalkyl; $R_3$ and Ar may be linked to each other via substituted or unsubstituted $(C_3\text{-}C_{20})$alkylene or substituted or unsubstituted $(C_3\text{-}C_{20})$alkenylene, containing or not containing a fusion ring, to thereby form an alicyclic ring, or a monocyclic or polycyclic aromatic ring; and the carbon atom of the said alicyclic ring, or the said monocyclic or polycyclic aromatic ring may be substituted by at least one heteroatom selected from N, O, and S;
$R_4$ is hydrogen or $(C_1\text{-}C_{20})$alkyl;
X i s O or S;
Z is $(C_1\text{-}C_{20})$alkyl, $-N(R_{11}R_{12})$, or $-O(R_{13})$; $R_{11}$ to $R_{13}$ each are independently of one another selected from hydrogen and $(C_1\text{-}C_{20})$alkyl; and $R_{11}$ and $R_{12}$ may be linked to each other via substituted or unsubstituted $(C_3\text{-}C_{20})$alkylene or substituted or unsubstituted $(C_3\text{-}C_{20})$alkenylene, containing or not containing a fusion ring, to thereby form an alicyclic ring, or a monocyclic or polycyclic aromatic ring; and the carbon atom of the said alicyclic ring, or the said monocyclic or polycyclic aromatic ring may be substituted by at least one heteroatom selected from nitrogen, oxygen, and sulfur;
n is an integer of 0 to 3;
$A_1$ and $A_2$ each are independently $CR_7$ or N;
$A_3$ is O, S, or $NR_8$, and $R_8$ is hydrogen or $(C_1\text{-}C_{20})$alkyl;
Y is selected from hydrogen, $-N(R_{31}R_{32})$, $-O(R_{33})$, $-S(R_{34})$, and $-P{=}O(R_{35})(R_{36})$, and $R_{31}$ to $R_{36}$ each are independ-

ently hydrogen or ($C_1$-$C_{20}$)alkyl; and

$R_{21}$ to $R_{24}$ and $R_7$ are selected from hydrogen, halogen, Q, ($C_1$-$C_{20}$)alkyl, ($C_3$-$C_{20}$)cycloalkyl, ($C_1$-$C_{20}$)alkoxy, ($C_6$-$C_{20}$)aryloxy, ($C_1$-$C_{20}$)alkylacyl, ($C_6$-$C_{20}$)arylacyl, ($C_1$-$C_{20}$)alkoxycarbonyl, ($C_6$-$C_{20}$)aryloxycarbonyl, ($C_1$-$C_{20}$)alkylacyloxy, ($C_6$-$C_{20}$)arylacyloxy, sulfonylamino, hydroxy, cyano, amino, acylamino, and 5- to 7- membered heterocycloalkyl containing at least one element selected from N, O, and S.

Chemical Formula 1 may be selected from, but not limited to the structures below.

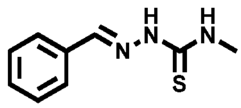
RIA 1

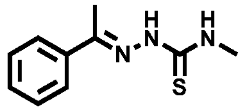
RIA 2

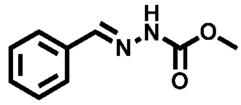
RIA 3

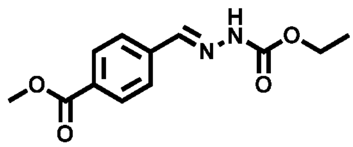
RIA 4

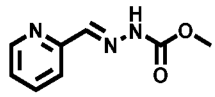
RIA 5

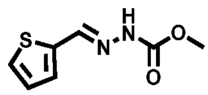
RIA 6

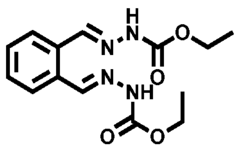
RIA 7

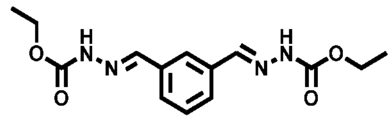
RIA 8

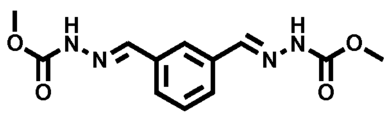
RIA 9

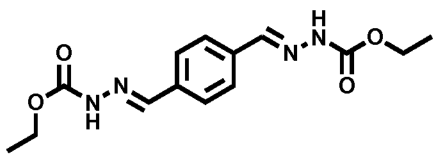
RIA 10

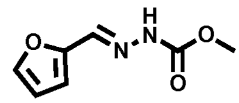
RIA 11

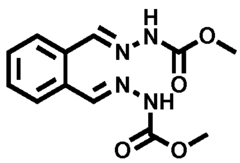
RIA 12

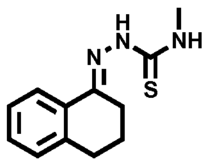
RIA 13

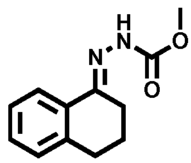
RIA 14

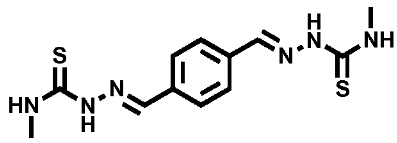
RIA 15

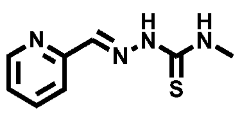
RIA 16

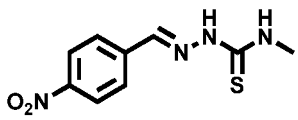
RIA 17

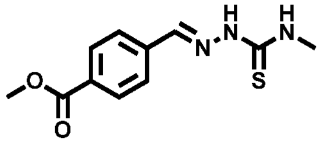
RIA 18

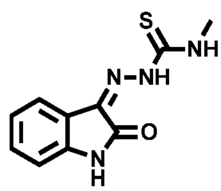
RIA 19

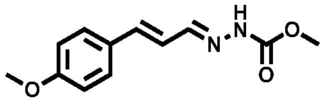
RIA 20

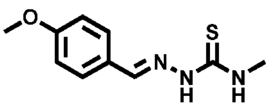
RIA 21

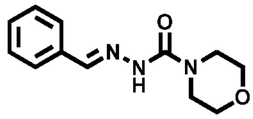
RIA 22

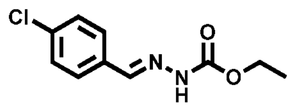
RIA 23

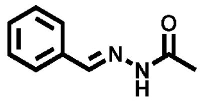

RIA 24

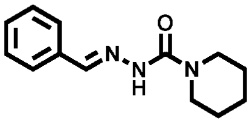

RIA 25

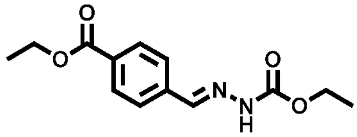

RIA 26

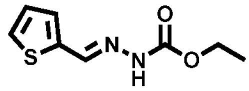

RIA 27

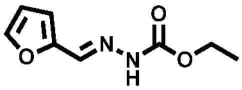

RIA 28

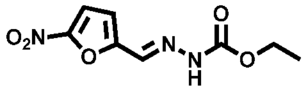

RIA 29

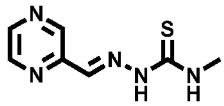

RIA 30

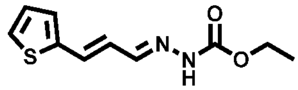

RIA 31

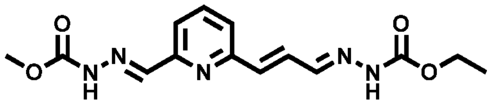

RIA 32

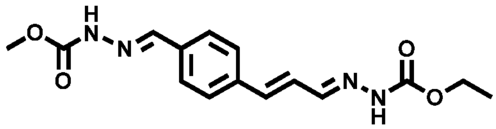

RIA 33

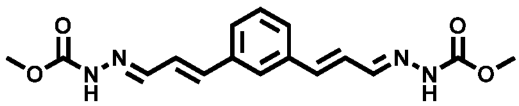

RIA 34

The optical film may have Rth(λ) satisfying Formulas (I) and (II) below.

(I) $50 \le Rth(550) \le 500$

(II) $Rth(700)/Rth(550) > 1.0$

(In Formulas above, Rth(λ) is a retardation value (unit: nm) in a thickness direction of the film at a wavelength, λnm.)

The optical film may be a cellulose acetate film.

In another general aspect, a composition for an optical film includes as a retardation additive, at least one selected from the compounds of Chemical Formula 1 in 1-15 parts by weight based on 100 parts by weight of a base resin.

The composition may further include one or two or more additives selected from the group consisting of a UV inhibitor, a particle, a plasticizer, a deterioration inhibitor, a stripping agent, an infrared absorber, and an optically anisotropic controller.

In still another aspect, an optical film is manufactured by using the composition for an optical film.

The optical film may be used in an optical compensation sheet, an optical filter for a three dimensional image, a polarizing plate, and a liquid crystal display, and preferably a liquid crystal display.

[Advantageous Effects]

The optical film according to the present invention can improve optical characteristics due to a high retardation value in a thickness direction.

Further, the optical film according to the present invention can improve the viewing angle and contrast of a VA mode LCD panel due to high retardation.

Further, the optical compensation sheet, the optical filter for a three dimensional image, the polarizing plate, and the liquid crystal display, manufactured by using the optical film according to the present invention, can have high contrast even at a wide viewing angle due to high retardation.

[Best Mode]

The present invention provides an optical film including at least one selected from the compounds of Chemical Formula 1 below.

[Chemical Formula 1]

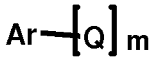

In Chemical Formula 1,

Ar is ($C_6$-$C_{20}$)aryl or ($C_3$-$C_{20}$)heteroaryl, provided that, the compound in which OR (wherein R is hydrogen or ($C_1$-$C_{20}$)alkyl) is substituted in ortho position of Q is excluded;
Q is

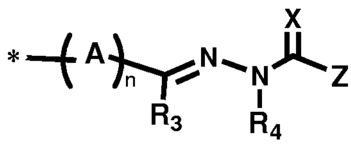
;

A is

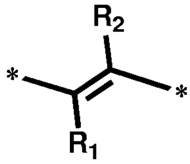
or
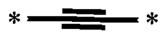
,

and $R_1$ and $R_2$ each are independently hydrogen, halogen, hydroxy, ($C_1$-$C_{20}$)alkyl, or ($C_3$-$C_{20}$)heterocycloalkyl;
$R_3$ is hydrogen, halogen, hydroxy, ($C_1$-$C_{20}$)alkyl, ($C_1$-$C_{20}$)alkylcarbonyl, ($C_6$-$C_{20}$)aryl, ($C_3$-$C_{20}$)heteroaryl, or ($C_3$-$C_{20}$)heterocycloalkyl; $R_3$ and a substituent of Ar may be linked to each other via substituted or unsubstituted ($C_3$-$C_{20}$)alkylene or substituted or unsubstituted ($C_3$-$C_{20}$)alkenylene, containing or not containing a fusion ring, to thereby form an alicyclic ring, or a monocyclic or polycyclic aromatic ring; and the carbon atom of the said alicyclic ring, or the said monocyclic or polycyclic aromatic ring may be substituted by at least one heteroatom selected from N, O, and S;
$R_4$ is hydrogen or ($C_1$-$C_{20}$)alkyl;
X i s O or S;
Z is ($C_1$-$C_{20}$)alkyl, -N($R_{11}R_{12}$), or -O($R_{13}$); $R_{11}$ to $R_{13}$ each are independently of one another selected from hydrogen and ($C_1$-$C_{20}$)alkyl; and $R_{11}$ and $R_{12}$ may be linked to each other via substituted or unsubstituted ($C_3$-$C_{20}$)alkylene or substituted or unsubstituted ($C_3$-$C_{20}$)alkenylene, containing or not containing a fusion ring, to thereby form an alicyclic ring, or a monocyclic or polycyclic aromatic ring; and the carbon atom of the said alicyclic ring, or the said monocyclic or polycyclic aromatic ring may be substituted by at least one heteroatom selected from N, O, and S;
n is an integer of 0 to 3;
m is an integer of 1 to 10; and
aforementioned alkyl and heterocycloalkyl of $R_1$ to $R_3$, alkyl of $R_4$, alkyl of Z, alkyl of $R_{11}$ to $R_{13}$, and the alicyclic ring or aromatic ring of Z and $R_3$ each may be independently of one another further substituted with at least one selected from the group consisting of halogen, nitro, cyano, hydroxy, amino, ($C_1$-$C_{20}$)alkyl, ($C_1$-$C_{20}$)alkoxy, ($C_2$-$C_{20}$)alkenyl, ($C_3$-$C_{20}$)cycloalkyl, and 5- to 7- membered heterocycloalkyl containing at least one element selected from N, O, and S.

The compound of Chemical Formula 1 of the present invention has a substituent with a double bond or a triple bond, or a substituent including an imine (C=N) bond on aryl or heteroacyl. These plural conjugations enable the retardation of the optical film to be increased, to thereby improve the viewing angle and contrast of the optical film, and thus, the optical film according to the present invention is suitable for a liquid crystal display.

As described herein, 「alkyl」, 「alkoxy」, and substituents containing other 「alkyl」 moieties include both straight

chain and branched chain ones, and 「cycloalkyl」 may include monocyclic hydrocarbon as well as polycyclic hydrocarbon such as substituted or unsubstituted adamantyl or substituted or unsubstituted ($C_7$-$C_{20}$)bicycloalkyl.

In Chemical Formula 1 of the present invention, aryl or heteroaryl of Ar may have, besides Q, a plurality of substitutions, which are the same as or different from each other, except for the compound in which OR (wherein R is hydrogen or ($C_1$-$C_{20}$)alkyl) is substituted in ortho position of Q. That is, aryl or heteroaryl of Chemical Formula 1 may be substituted or unsubstituted aryl or substituted or unsubstituted heteroaryl, and here, at least one substituent Q is necessarily substituted.

In Chemical Formula 1 according to an embodiment of the present invention, Ar may be further substituted with at least one selected from the group consisting of halogen, ($C_1$-$C_{20}$)alkyl, ($C_3$-$C_{20}$) cycloalkyl, ($C_1$-$C_{20}$)alkoxy, ($C_6$-$C_{20}$)aryloxy, ($C_1$-$C_{20}$)alkylacyl, ($C_6$-$C_{20}$)arylacyl, ($C_1$-$C_{20}$)alkoxycarbonyl, ($C_6$-$C_{20}$)aryloxycarbonyl, ($C_1$-$C_{20}$)alkylacyloxy, ($C_6$-$C_{20}$)arylacyloxy, sulfonylamino, nitro, hydroxy, cyano, amino, acylamino, Q, and 5- to 7- membered heterocycloalkyl containing at least one element selected from N, O, and S;

$R_1$ and $R_2$ each are independently hydrogen;
$R_3$ is hydrogen, ($C_1$-$C_{20}$)alkyl, or ($C_1$-$C_{20}$)alkylcarbonyl;
$R_4$ is hydrogen or ($C_1$-$C_{20}$)alkyl;
X is O or S;
Z is ($C_1$-$C_{20}$)alkyl, -N($R_{11}R_{12}$), or -O($R_{13}$); $R_{11}$ to $R_{13}$ each are independently of one another selected from hydrogen and ($C_1$-$C_{20}$)alkyl; and $R_{11}$ and $R_{12}$ may be linked to each other via substituted or unsubstituted ($C_3$-$C_{20}$)alkylene or substituted or unsubstituted ($C_3$-$C_{20}$)alkenylene, containing or not containing a fusion ring, to thereby form an alicyclic ring, or a monocyclic or polycyclic aromatic ring; and the carbon atom of the said alicyclic ring, or the said monocyclic or polycyclic aromatic ring may be substituted by at least one heteroatom selected from N, O, and S;
n is an integer of 0 to 3;
aforementioned alkyl and heterocycloalkyl of $R_1$ to $R_3$, alkyl of $R_4$, alkyl of Z, and alkyl of $R_{11}$ to $R_{13}$ each may be independently of one another further substituted with at least one selected from the group consisting of halogen, nitro, cyano, hydroxy, amino, ($C_1$-$C_{20}$)alkyl, ($C_1$-$C_{20}$)alkoxy, ($C_2$-$C_{20}$)alkenyl, ($C_3$-$C_{20}$)cycloalkyl, and 5- to 7- membered heterocycloalkyl containing at least one element selected from N, O, and S.

Specifically, the compound of Chemical Formula 1 according to an embodiment of the present invention may be represented by compounds of any one of Chemical Formulas 2 to 5 below.

[Chemical Formula 2]

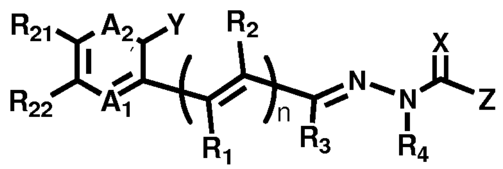

[Chemical Formula 3]

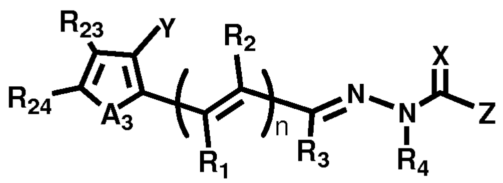

[Chemical Formula 4]

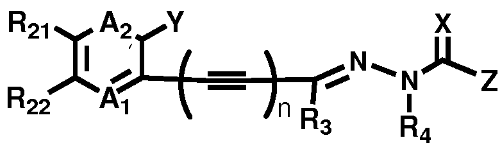

[Chemical Formula 5]

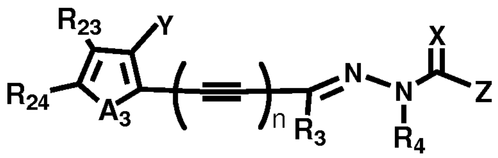

In Chemical Formulas 2 or 5,

$R_1$ and $R_2$ each are independently hydrogen, halogen, hydroxy, $(C_1-C_{20})$alkyl, or $(C_3-C_{20})$heterocycloalkyl;
$R_3$ is hydrogen, halogen, hydroxy, $(C_1-C_{20})$alkyl, or $(C_3-C_{20})$heterocycloalkyl; $R_3$ and Ar may be linked to each other via substituted or unsubstituted $(C_3-C_{20})$alkylene or substituted or unsubstituted $(C_3-C_{20})$alkenylene, containing or not containing a fusion ring, to thereby form an alicyclic ring, or a monocyclic or polycyclic aromatic ring; and the carbon atom of the said alicyclic ring, or the said monocyclic or polycyclic aromatic ring may be substituted by at least one heteroatom selected from N, O, and S;
$R_4$ is hydrogen or $(C_1-C_{20})$alkyl;
X is O or S;
Z is $(C_1-C_{20})$ alkyl, $-N(R_{11}R_{12})$, or $-O(R_{13})$; $R_{11}$ to $R_{13}$ each are independently of one another selected from hydrogen and $(C_1-C_{20})$alkyl; and $R_{11}$ and $R_{12}$ may be linked to each other via substituted or unsubstituted $(C_3-C_{20})$alkylene or substituted or unsubstituted $(C_3-C_{20})$alkenylene, containing or not containing a fusion ring, to thereby form an alicyclic ring, or a monocyclic or polycyclic aromatic ring; and the carbon atom of the said alicyclic ring, or the said monocyclic or polycyclic aromatic ring may be substituted by at least one heteroatom selected from N, O, and S;
n is an integer of 0 to 3;
$A_1$ and $A_2$ each are independently $CR_7$ or N;
$A_3$ is O, S, or $NR_8$, and $R_8$ is hydrogen or $(C_1-C_{20})$alkyl;
Y is selected from hydrogen, $-N(R_{31}R_{32})$, $-O(R_{33})$, $-S(R_{34})$, and $-P{=}O(R_{35})(R_{36})$, and $R_{31}$ to $R_{36}$ each are independently hydrogen or $(C_1-C_{20})$alkyl; and
$R_{21}$ to $R_{24}$ and $R_7$ are selected from hydrogen, halogen, Q, $(C_1-C_{20})$alkyl, $(C_3-C_{20})$cycloalkyl, $(C_1-C_{20})$alkoxy, $(C_6-C_{20})$aryloxy, $(C_1-C_{20})$alkylacyl, $(C_6-C_{20})$arylacyl, $(C_1-C_{20})$alkoxycarbonyl, $(C_6-C_{20})$aryloxycarbonyl, $(C_1-C_{20})$alkylacyloxy, $(C_6-C_{20})$arylacyloxy, sulfonylamino, hydroxy, cyano, amino, acylamino, and 5- to 7- membered heterocycloalkyl containing at least one element selected from N, O, and S.

More specifically, Chemical Formula 1 of the present invention may be selected from the structures below, but is not limited thereto.

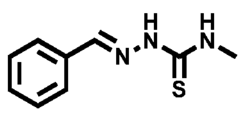

RIA 1

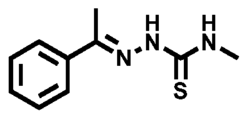

RIA 2

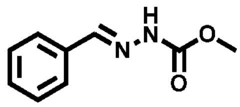

RIA 3

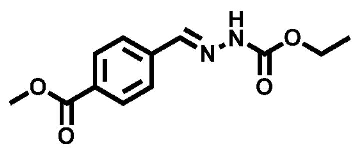

RIA 4

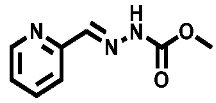

RIA 5

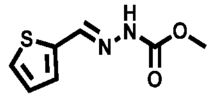

RIA 6

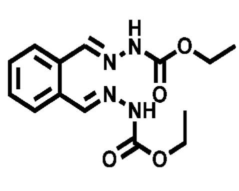

RIA 7

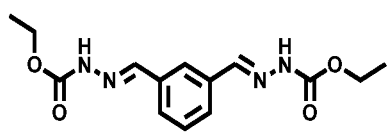

RIA 8

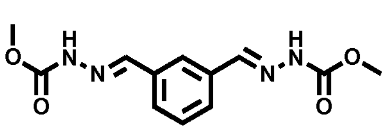

RIA 9

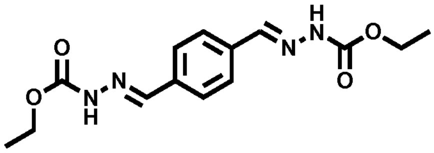

RIA 10

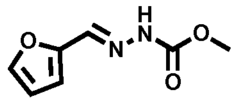

RIA 11

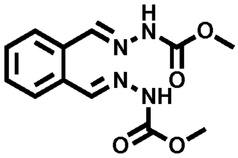

RIA 12

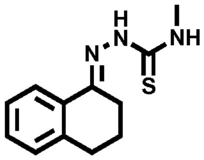

RIA 13

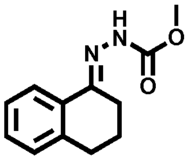

RIA 14

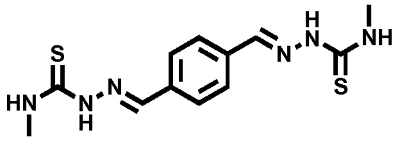

RIA 15

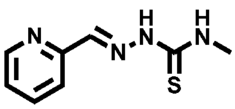

RIA 16

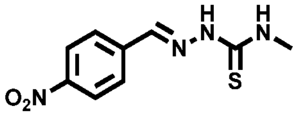

RIA 17

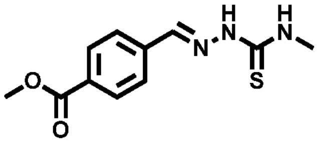

RIA 18

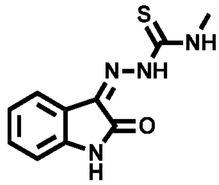

RIA 19

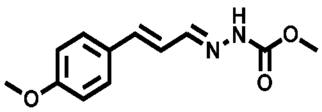

RIA 20

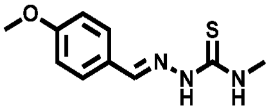

RIA 21

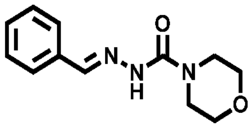

RIA 22

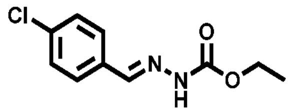

RIA 23

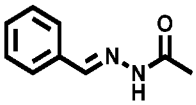

RIA 24

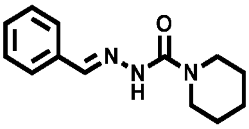

RIA 25

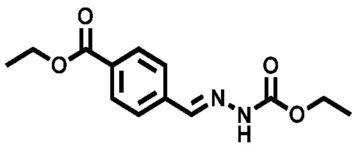

RIA 26

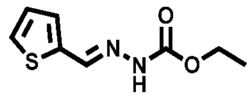

RIA 27

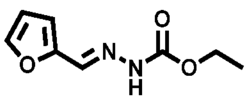

RIA 28

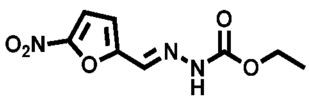

RIA 29

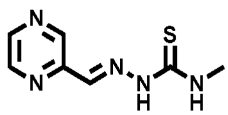

RIA 30

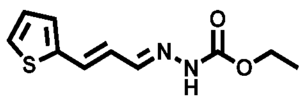

RIA 31

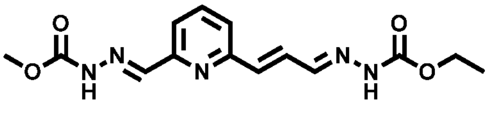

RIA 32

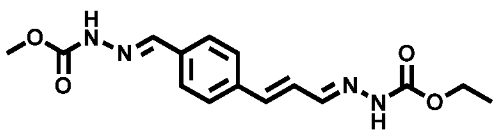

RIA 33

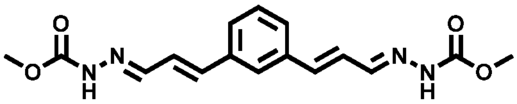

RIA 34

The compound of the present invention may be used as a retardation additive for the optical film.

In the optical film according to an embodiment of the present invention, Rth(λ) may satisfy Formulas (I) and (II) below:

$$(I)\ 50 \leq Rth(550) \leq 500$$

$$(II)\ Rth(700)/Rth(550) > 1.0$$

In Formulas above, Rth(λ) is a retardation value (unit: nm) in a thickness of the film at a wavelength, λnm.

In addition, the optical film of the present invention may be preferably a cellulose acetate film. Here, the cellulose acetate film may a substitution degree of 2.7 to 3.0, which is measured by the ASTM D-817-91.

The compound of Chemical Formula 1 of the present invention may be prepared as shown in Reaction Scheme 1, and the preparing method below does not limit the method for preparing the compound of Chemical Formula 1. Therefore, modification of the preparing method below will be obvious to those skilled in the art.

[Reaction Scheme 1]

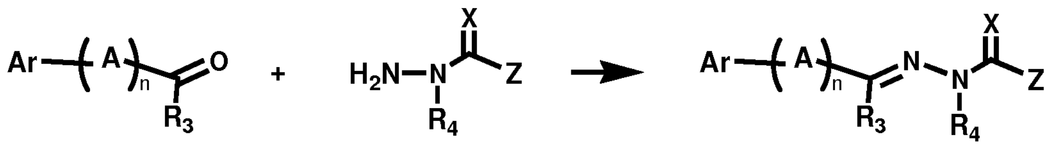

In Reaction Scheme 1,

A, $R_3$ to $R_4$, X, Y, and Z have the same meanings as those of Chemical Formula 1.

In addition, the present invention provides a composition for an optical film comprising, as a retardation additive, at least one selected from the compounds of Chemical Formula 1 in 1-15 parts by weight based on 100 parts by weight of a base resin.

The base resin may mean a basic resin usually used for the optical film, and may be preferably a cellulose acetate film having various substitution degrees.

One or two or more additives selected from the group consisting of a UV inhibitor, fine particles, a plasticizer, a deterioration inhibitor, a stripping agent, an infrared absorber, and an optically anisotropic controller may be further added to the composition according an embodiment of the present invention.

Hereinafter, respective constitutions of the present invention will be described in more detail.

The optical film of the present invention may be a common optical film, but preferably a cellulose acetate film. First, the cellulose acetate film will be described. The cellulose acetate film according to an embodiment of the present invention has a density of about 1.2-1.35, but is not limited thereto.

Cellulose acetate is ester of cellulose and acetic acid, and all or some of hydrogen atoms of hydroxyl groups at the positions 2, 3, and 6 of a glucose unit constituting cellulose are substituted by acetyl groups. The substitution degree of cellulose acetate is not limited, but is preferably 2.7 or higher, and more preferably 2.7 - 3.0. The substitution degree may be measured according to the ASTM D-817-91.

In the present invention, the molecular weight range of cellulose acetate is not limited, but the weight average molecular weight thereof is preferably in the range of 200,000 - 350,000. In addition, the molecular weight distribution of cellulose acetate, Mw/Mn, (Mw is weight average molecular weight and Mn is number average molecular weight), is preferably 1.4 - 1.8, and more preferably 1.5 - 1.7.

The cellulose acetate film is preferably manufactured by a solvent cast method using a cellulose acetate dope solution. According to the solvent cast method, the film is formed by casting a solution (dope) prepared by dissolving cellulose acetate in a solvent on a supporter and then evaporating the solvent.

As a raw material of the cellulose acetate dope solution, cellulose acetate particles are preferably used. Here, preferably, 90wt% or higher of the cellulose acetate particles have an average particle size of 0.5 to 5 mm. In addition, preferably, 50 wt% or higher of the cellulose acetate particles used have an average particle size of 1 to 4 mm.

The cellulose acetate particles preferably have a shape close to a sphere if possible. The cellulose acetate particles are dried such that they have a moisture content of 2 wt% or lower, and more preferably 1 wt% or lower, which are then used for the dope solution.

Then, the additive used in the cellulose acetate film will be described.

In the cellulose acetate solution (dope) used in the solvent cast method, various kinds of additives according to the uses of respective preparing processes, for example, a plasticizer, a UV inhibitor, a deterioration inhibitor, fine particles, a stripping agent, an infrared absorber, an optically anisotropic controller, and the like may be added. Specific kinds of these additives are not limited as long as they are usually used in the art, and the contents thereof may be preferably in the range in which physical properties of the film are not deteriorated. The time to add the additive is determined depending on the kind of additive. The additive may be added at the last stage of preparing the dope.

The plasticizer is used for enhancing mechanical strength of the film, and in the case of using the plasticizer, the time for drying the film may be shortened. Any plasticizer may be used without limitation as long as it is usually used. Examples thereof may include phosphoric acid ester, and carboxylic acid ester selected from phthalic acid ester and citric acid ester, and the like. Examples of phosphoric acid ester may include triphenyl phosphate (TPP), biphenyldiphenyl phosphate, tricresylphosphate (TCP), and the like. Examples of phthalic acid ester may include dimethyl phthalate (DMP), diethyl phthalate (DEP), dibutyl phthalate (DBP), dioctyl phthalate (DOP), diphenyl phthalate (DPP), diethylhexyl phthalate (DEHP), and the like. Examples of citric acid ester may include o-acetyltriethyl citrate (OACTE), o-acetyltributyl citrate (OACTB), and the like. Other examples of carboxylic acid ester may include butylolate, methylacetyllysinolate, dibutylsebacate, and various kinds of trimellitic acid ester. Preferably, phthalic acid ester (DMP, DEP, DBP, DOP, DPP, and DEHP) plasticizer may be used. The content of the plasticizer is used in 2-20 parts by weight, more preferably 5-15 parts by weight based on 100 parts by weight of cellulose acetate.

As the UV inhibitor, hydroxybenzophenone based compounds, benzotriazole based compounds, salicylic acid ester based compounds, cyanoacrylate based compounds, and the like may be used. The content of the UV inhibitor is used in 0.1-3 parts by weight, more preferably 0.5-2 parts by weight based on 100 parts by weight of cellulose acetate.

As the deterioration inhibitor, for example, an antioxidant, a peroxide decomposer, a radical inhibitor, a metal deactivator, a deoxidant, a photo-stabilizer (hindered amine or the like), or the like may be used. Particularly, preferable examples of the deterioration inhibitor may include butylated hydroxy toluene (BHT) and tribenzyl amine (TBA). The content of the deterioration inhibitor is used in 0.01-5 parts by weight, more preferably 0.1-1 parts by weight based on 100 parts by weight of cellulose acetate.

The fine particles are added in order to favorably maintain anti-curling, conveyability, anti-adhesion in a roll shape, or anti-scratch of the film. Any one selected from an inorganic compound and an organic compound may be used for the fine particles. For example, as the inorganic compound, a compound containing silicon, silicon dioxide, titanium dioxide, zinc oxide, aluminum oxide, barium oxide, zirconium oxide, strontium oxide, antimony oxide, tin oxide, tin oxide•antimony, calcium carbonate, talc, clay, calcined kaolin, calcined calcium silicate, calcium silicate hydrate, aluminum silicate, magnesium silicate, calcium phosphate, and the like are preferable, and the inorganic compound containing silicon, zirconium oxide, and the like are more preferably usable. The fine particles may have an average first particle size of 80nm or smaller, preferably 5 - 80nm, more preferably 5 - 60nm, and particularly preferably 8 - 50nm. If the average first particle size is above 80nm, smoothness of the film is damaged.

In addition, as necessary, an optical anisotropy regulator, a wavelength dispersion regulator, or the like may be added. These additives may be used without limitation as long as it is usually used in the art.

In addition, the present invention provides an optical film manufactured by using the composition for an optical film according to the present invention.

Then, a method for manufacturing the cellulose acetate film of the present invention will be described.

In the present invention, a cellulose acetate composition as follows, that is, a dope solution is prepared in order to prepare the cellulose acetate film.

The cellulose acetate composition may contain 1-15 parts by weight of the retardation improver of said Chemical Formula 1 based on 100 parts by weight of cellulose acetate.

In the present invention, the solid concentration in the dope is favorably 15-25 wt%, preferably 16-23 wt%. If the solid concentration in the dope is below 15 wt%, fluidity thereof is too high to form the film. If the solid concentration is above 25 wt%, complete dissolution is difficult.

In the present invention, the cellulose acetate content is 70 wt% or higher, preferably 70 - 90 wt%, and more preferably 80 - 85 wt%, based on the total solid content. In addition, two or more kinds of cellulose acetate having different substitution degrees, polymerization degrees, or molecular distributions may be mixed and used.

The retardation additive is used in order to improve or deteriorate the retardation, and the retardation improver for improving the retardation is preferably used as the retardation additive of the present invention.

The retardation additive is preferably used in the range of 1-15 parts by weight based on 100 parts by weight of cellulose acetate. In the case where the retardation additive is used within the range above, the desired range of retardation may be achieved.

In the case where the film is manufactured by the solvent casting method, an organic solvent is preferable as a solvent for preparing the cellulose acetate composition (dope). Halogenated hydrocarbon is preferably used as an organic solvent. Examples of the halogenated hydrocarbon may include chlorinated hydrocarbon, methylene chloride, and chloroform, and among them, methylene chloride is most preferably used.

Alternatively, as necessary, the organic solvent besides halogenated hydrocarbon may be mixed therewith, and used. Examples of the organic solvent besides halogenated hydrocarbon may include ester, ketone, ether, alcohol, and hydrocarbon. As the ester, methylformate, ethylformate, propylformate, pentylformate, methylacetate, ethylacetate, pentylacetate, and the like may be used; as the ketone, acetone, methylethyl ketone, diethyl ketone, diisobutyl ketone, cyclopentanone, cyclohexanone, methylcyclohexanone, and the like may be used; as the ether, diisopropylether, dimethoxymethane, dimethoxyethane, 1,4-dioxane, 1,3-dioxolane, tetrahydrofuran, anisole, penetol, and the like may be used; as the alcohol, methanol, ethanol, 1-propanol, 2-propanol, 1-butanol, 2-butanol, t-butanol, 1-pentanol, 2-methyl-2-butanol, cyclohexanol, 2-fluoro-ethanol, 2,2,2-trifluoroethanol, 2,2,3,3-tetrafluoro-1-propanol, and the like may be used.

More preferably, methylene chloride may be used as a main solvent, and alcohol may be used as a sub-solvent. Specifically, methylene chloride and alcohol may be mixed in a weight ratio of 80:20 - 95:5, and then used.

The cellulose acetate composition may be prepared depending on a room-temperature, high-temperature, and low-temperature dissolution method.

The viscosity of the cellulose acetate composition is preferably 1 to 400 Pa•s, and more preferably 10 to 200 Pa•s, at 40 °C.

The cellulose acetate film may be manufactured by the usual solvent casting method. More specifically, the prepared dope (cellulose acetate composition) is first stored in a storage, and bubbles contained in the dope are defoamed. The defoamed dope is sent to a pressurization type die through a pressurization type constant gear pump capable of sending a constant amount from a dope outlet at high precision depending on the number of rotations. Then, the dope is uniformly casted on a metal supporter that is endlessly revolved from a mouthpiece (slit) of the pressurization type die, and then the half-dried casting film is exfoliated from the metal supporter at an exfoliation point where the metal supporter is almost revolved. The prepared web is conveyed to a tenter while the width thereof is maintained by clipping both ends thereof, followed by drying. Then, the resultant web is conveyed to a roller of the drying unit, followed by drying, and then a predetermined length thereof is wound by using a winder. In addition, at the time of manufacturing the casting film, unilateral and bilateral stretching in mechanical and transverse directions may be possible while the amount of residual solvent is 10 - 40 wt%. In addition, after preparing the casting film, offline stretching is also possible. The stretching degree is preferably in the range of 5-100%, more preferably 10-80%, and most preferably 20-50%.

At the time of solution coating, the space temperature is preferably -50 °C to 50 °C, more preferably -30 °C to 40 °C, and most preferably -20 °C to 30 °C. The cellulose acetate solution coated at a low space temperature is instantly cooled on the supporter, to thereby improve the gel strength, and thus, a film having large amount of organic solvent residual is obtained. Therefore, the film may be exfoliated from the supporter in a short time without evaporating the organic solvent from the cellulose acetate. As gas for cooling a space, ordinary air, nitrogen, argon, or helium may be used. The relative humidity is preferable 0 to 70%, and more preferably 0 to 50%.

The temperature of the supporter (casting part) on which the cellulose acetate solution is coated is preferably -50 °C to 130 °C, more preferably -30 °C to 25 °C, and most preferably -20 °C to 15 °C. The cooled gas may be introduced to the casting part in order to cool the casting part. A cooling apparatus may be disposed in the casting part to cool the space. At the time of cooling, it is important to be careful so as to prevent water from adhering onto the casting part. In the case of cooling by using the gas, it is preferable to dry the gas in advance.

In addition, as necessary, the cellulose acetate film may be surface-treated. The surface treatment, generally, is performed in order to improve adhesive property of the cellulose acetate film. As the surface treatment method, glow discharge treatment, ultraviolet irradiation treatment, corona treatment, flame treatment, saponification treatment, or the like may be employed.

The thickness of the cellulose acetate film is preferably in the range of 20 - 140 $\mu$m, and more preferably 40 - 100$\mu$m.

The optical film according to the present invention may be used in the polarizing plate, optical compensation sheet, optical filter for a three dimensional image, and a liquid crystal display, and one or two or more sheets thereof may be laminated and used. The liquid crystal display is preferably operated in a VA mode.

Hereinafter, the present invention will be illustrated with the examples for the specific description, but the present invention is not limited to the following examples.

Hereinafter, physical properties of the film were measured by the following methods.

1) Optical Anistropy

The Re value was measured by the incident light of wavelength 550 nm in a normal direction of the film in a birefringence measurement instrument (Axoscan, product name, manufactured by Axometrics, Inc.). The Rth value was obtained from the equation below by using three refractive index components of a refractive index ellipsoid, which are obtained by measuring the light of 550 nm, from 0 to 50 degrees at an interval of 10 degrees with respect to the normal direction of the film, using a slow axis in Re plane as a tilt axis.

$$Rth=[(n_x+n_y)/2-n_z] \times d$$

$n_x$: larger refractive index between two refractive indexes in a plane
$n_y$: smaller refractive index between two refractive indexes in a plane
$n_z$: refractive index in a thickness direction
d : thickness of the film

[Preparation Example] Synthesis of Retardation Additive

((E)-2-benzylidene)-N-methylhydrazinecarbothioamide

Benzaldehyde (10 g, 94.2 mmol) was added to 300 mL of ethanol, and N-methylhydrazinecarbothioamide (9.90 g, 94.2 mmol) was added thereto, followed by stirring at room temperature for 18 hours. The solid compound generated during the reaction was filtered, and then washed with a small amount of ethanol solution, followed by drying, to obtain the title compound (16.5g, yield 92%).

[Example 1]

<u>Preparation of Cellulose Acetate Composition (Dope)</u>

The compositional components below were put into a stirrer, and dissolved at a temperature of 30 °C.
Among the compositional components below, 2-(2H-Benzotriazol-2-yl)-6-(1-methyl-1-phenylethyl)-4-(1,1,3,3-tetramethylbutyl)phenol was used as a UV inhibitor.

| | |
|---|---|
| Cellulose acetate particles having a substitution degree of 2.87 | 100 parts by weight |
| RIA I Compound | 10 parts by weight |
| UV inhibitor | 2 parts by weight |
| Silicon dioxide, average particle size 16 nm | 0.5 parts by weight |
| Methylene chloride | 440 parts by weight |
| Methanol | 50 parts by weight |

The obtained dope was warmed to 30 °C, transferred to a gear pump, filtered by a filter bed having an absolute filtering precision of 0.01 mm, and then again filtered by a cartridge filtering apparatus having an absolute filtering precision of 5μm.

<u>Manufacture of Cellulose Ester Film</u>

The dope obtained through the filtering processes was casted on a glass supporter through a casting die, dried at room temperature for 7 min., and then exfoliated. Again, the exfoliated material was dried at 140 °C for 60 minutes, so that the amount of residual solvent was controlled to be 0.5 wt% or lower. After connection to a tenter, the film was stretched by 102% in a width direction thereof. After the film was removed from the tenter, right and left-sided ends of the film were removed by 150 mm, respectively. The film having removed ends was dried by a drier. Both ends of the film come out of the drier were cut off by 3 cm, respectively. Then, the film was subjected to a knurling process to have a 100 μm height knurling on a portion of the film which is distanced at 10 mm from the ends thereof, and wound in a role type. Optical anisotropy of the obtained specimen was measured by the method as described above, and the measurement results were tabulated in Table 1.

[Examples 2 to 9 and 11 to 14]

Each film was manufactured by the same method as Example 1 except that the kind of compound was changed as shown in Table 1 below instead of RIA 1, the compound of Chemical Formula 1, and optical anisotropy thereof was measured and then the measurement results were tabulated in Table 1.

[Example 9]

Preparation of Cellulose Acetate Composition (Dope)

The composition below was put into a stirrer, and dissolved at a temperature of 30 °C.
Among the compositional components below, 2-(2H-Benzotriazol-2-yl)-6-(1-methyl-1-phenylethyl)-4-(1,1,3,3-tetramethylbutyl)phenol was used as a UV inhibitor.

| | |
|---|---|
| Cellulose acetate particles having a substitution degree of 2.87 | 100 parts by weight |
| RIA 9 compound | 6.7 parts by weight |
| UV inhibitor | 2 parts by weight |
| Silicon dioxide, average particle size 16 nm | 0.5 parts by weight |
| Methylene chloride | 277 parts by weight |
| Methanol | 24 parts by weight |

The obtained dope was warmed to 30 °C, transferred to a gear pump, filtered by a filter bed having an absolute filtering precision of 0.01 mm, and then again filtered by a cartridge filtering apparatus having an absolute filtering precision of 5μm.

[Example 10]

Preparation of Cellulose Acetate Composition (Dope)

The composition below was put into a stirrer, and dissolved at a temperature of 30 °C.
Among the compositional components below, 2-(2H-Benzotriazol-2-yl)-6-(1-methyl-1-phenylethyl)-4-(1,1,3,3-tetramethylbutyl)phenol was used as a UV inhibitor.

| | |
|---|---|
| Cellulose acetate particles having a substitution degree of 2.87 | 100 parts by weight |
| RIA 10 compound | 1.6 parts by weight |
| UV inhibitor | 2 parts by weight |
| Silicon dioxide, average particle size 16 nm | 0.5 parts by weight |
| Methylene chloride | 277 parts by weight |
| Methanol | 24 parts by weight |

The obtained dope was warmed to 30 °C, transferred to a gear pump, filtered by a filter bed having an absolute filtering precision of 0.01 mm, and then again filtered by a cartridge filtering apparatus having an absolute filtering precision of 5μm.
In Examples 9 and 10, each film was manufactured by the same method except that the kind of compound was changed as shown in Table 1 below instead of RIA 1, the compound of Chemical Formula 1, and optical anisotropy thereof was measured and then the measurement results were tabulated in Table 1.

[Comparative Example 1]

The cellulose acetate film was manufactured by the same method as Example 1 except that the dope was prepared without addition of the retardation additive in Example 1, and optical anisotropy thereof was measured by the method as described above and the measurement results were tabulated in Table 1.

[Table 1]

| | Compound | Thickness (μm) | Re (nm) | Rth (nm) |
|---|---|---|---|---|
| Example 1 | RIA 1 | 40 | 1.11 | 210.91 |
| Example 2 | RIA 2 | 40 | 3.22 | 127.62 |
| Example 3 | RIA 3 | 40 | 0.23 | 87.50 |
| Example 4 | RIA 4 | 40 | 2.64 | 168.44 |

(continued)

| | Compound | Thickness ($\mu$m) | Re (nm) | Rth (nm) |
|---|---|---|---|---|
| Example 5 | RIA 5 | 40 | 1.83 | 81.51 |
| Example 6 | RIA 6 | 40 | 1.51 | 69.88 |
| Example 7 | RIA 7 | 40 | 1.28 | 68.80 |
| Example 8 | RIA 8 | 40 | 0.74 | 109.33 |
| Example 9 | RIA 9 | 40 | 0.61 | 108.07 |
| Example 10 | RIA 10 | 40 | 0.68 | 73.94 |
| Example 11 | RIA 11 | 40 | 0.73 | 61.99 |
| Example 12 | RIA 12 | 40 | 0.96 | 86.19 |
| Example 13 | RIA 13 | 40 | 1.20 | 140.54 |
| Example 14 | RIA 14 | 40 | 0.45 | 60.86 |
| Comparative Example 1 | - | 40 | - | 28.2 |

As shown in Table 1, it can be confirmed that when the retardation additive described in the examples was added, unlike the existing plasticizer, the obtained film had a high Rth value.

## Claims

**1.** An optical film comprising at least one retardation additive selected from compounds of Chemical Formula 1 below:

[Chemical Formula 1]

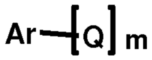

in Chemical Formula 1,

Ar is ($C_6$-$C_{20}$)aryl or ($C_3$-$C_{20}$)heteroaryl, provided that the compound in which OR (wherein R is hydrogen or ($C_1$-$C_{20}$)alkyl) is substituted in ortho position of Q is excluded;
Q is

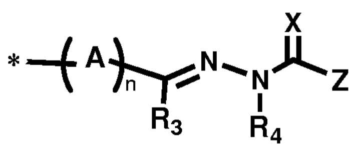

;

A is

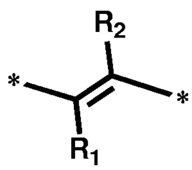

or

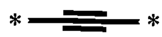

,

and $R_1$ and $R_2$ each are independently hydrogen, halogen, hydroxy, ($C_1$-$C_{20}$)alkyl, or ($C_3$-$C_{20}$)heterocycloalkyl;

$R_3$ is hydrogen, halogen, hydroxy, $(C_1-C_{20})$alkyl, $(C_1-C_{20})$alkylcarbonyl, $(C_6-C_{20})$aryl, $(C_3-C_{20})$heteroaryl, or $(C_3-C_{20})$heterocycloalkyl; $R_3$ and a substituent of Ar may be linked to each other via substituted or unsubstituted $(C_3-C_{20})$alkylene or substituted or unsubstituted $(C_3-C_{20})$alkenylene, containing or not containing a fusion ring, to thereby form an alicyclic ring, or a monocyclic or polycyclic aromatic ring; and the carbon atom of the said alicyclic ring, or the said monocyclic or polycyclic aromatic ring may be substituted by at least one heteroatom selected from N, O, and S;
$R_4$ is hydrogen or $(C_1-C_{20})$alkyl;
X is O or S;
Z is $(C_1-C_{20})$ alkyl, $-N(R_{11}R_{12})$, or $-O(R_{13})$; $R_{11}$ to $R_{13}$ each are independently of one another selected from hydrogen and $(C_1-C_{20})$alkyl; and $R_{11}$ and $R_{12}$ may be linked to each other via substituted or unsubstituted $(C_3-C_{20})$alkylene or substituted or unsubstituted $(C_3-C_{20})$alkenylene, containing or not containing a fusion ring, to thereby form an alicyclic ring, or a monocyclic or polycyclic aromatic ring; and the carbon atom of the said alicyclic ring, or the said monocyclic or polycyclic aromatic ring may be substituted by at least one heteroatom selected from N, O, and S;
n is an integer of 0 to 3;
m is an integer of 1 to 10; and
aforementioned alkyl and heterocycloalkyl of $R_1$ to $R_3$, alkyl of $R_4$, alkyl of Z, alkyl of $R_{11}$ to $R_{13}$, and the alicyclic ring or aromatic ring of Z and $R_3$ each may be independently of one another further substituted with at least one selected from the group consisting of halogen, nitro, cyano, hydroxy, amino, $(C_1-C_{20})$alkyl, $(C_1-C_{20})$alkoxy, $(C_2-C_{20})$alkenyl, $(C_3-C_{20})$cycloalkyl, and 5- to 7- membered heterocycloalkyl containing at least one element selected from N, O, and S.

**2.** The optical film of claim 1, wherein Ar may be further substituted with at least one selected from the group consisting of halogen, $(C_1-C_{20})$alkyl, $(C_3-C_{20})$cycloalkyl, $(C_1-C_{20})$alkoxy, $(C_6-C_{20})$aryloxy, $(C_1-C_{20})$alkylacyl, $(C_6-C_{20})$arylacyl, $(C_1-C_{20})$alkoxycarbonyl, $(C_6-C_{20})$aryloxycarbonyl, $(C_1-C_{20})$alkylacyloxy, $(C_6-C_{20})$arylacyloxy, sulfonylamino, nitro, hydroxy, cyano, amino, acylamino, Q, and 5- to 7-membered heterocycloalkyl containing at least one element selected from N, O, and S;
$R_1$ and $R_2$ each are independently hydrogen;
$R_3$ is hydrogen, $(C_1-C_{20})$alkyl, or $(C_1-C_{20})$alkylcarbonyl;
$R_4$ is hydrogen or $(C_1-C_{20})$alkyl;
X is O or S;
Z is $(C_1-C_{20})$alkyl, $-N(R_{11}R_{12})$, or $-O(R_{13})$; $R_{11}$ to $R_{13}$ each are independently of one another selected from hydrogen and $(C_1-C_{20})$alkyl; and $R_{11}$ and $R_{12}$ may be linked to each other via substituted or unsubstituted $(C_3-C_{20})$alkylene or substituted or unsubstituted $(C_3-C_{20})$alkenylene, containing or not containing a fusion ring, to thereby form an alicyclic ring, or a monocyclic or polycyclic aromatic ring; and the carbon atom of the said alicyclic ring, or the said monocyclic or polycyclic aromatic ring may be substituted by at least one heteroatom selected from N, O, and S;
n is an integer of 0 to 3; and
aforementioned alkyl and heterocycloalkyl of $R_1$ to $R_3$, alkyl of $R_4$, alkyl of Z, and alkyl of $R_{11}$ to $R_{13}$ each may be independently of one another further substituted with at least one selected from the group consisting of halogen, nitro, cyano, hydroxy, amino, $(C_1-C_{20})$alkyl, $(C_1-C_{20})$alkoxy, $(C_2-C_{20})$alkenyl, $(C_3-C_{20})$cycloalkyl, and 5- to 7- membered heterocycloalkyl containing at least one element selected from N, O, and S.

**3.** The optical film of claim 1, wherein the compound of Chemical Formula 1 is represented by any one of Chemical Formulas 2 to 5 below:

[Chemical Formula 2]

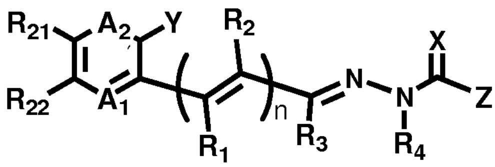

[Chemical Formula 3]

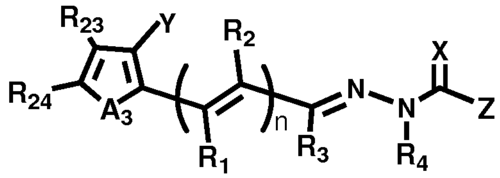

[Chemical Formula 4]

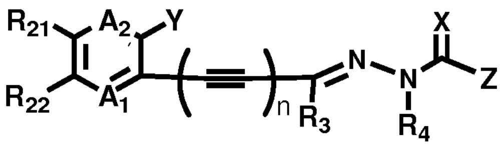

[Chemical Formula 5]

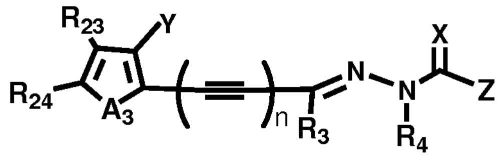

in Chemical Formulas 2 or 5,

$R_1$ and $R_2$ each are independently hydrogen, halogen, hydroxy, $(C_1\text{-}C_{20})$alkyl, or $(C_3\text{-}C_{20})$heterocycloalkyl;
$R_3$ is hydrogen, halogen, hydroxy, $(C_1\text{-}C_{20})$alkyl, or $(C_3\text{-}C_{20})$heterocycloalkyl; $R_3$ and Ar may be linked to each other via substituted or unsubstituted $(C_3\text{-}C_{20})$alkylene or substituted or unsubstituted $(C_3\text{-}C_{20})$alkenylene, containing or not containing a fusion ring, to thereby form an alicyclic ring, or a monocyclic or polycyclic aromatic ring; and the carbon atom of the said alicyclic ring, or the said monocyclic or polycyclic aromatic ring may be substituted by at least one heteroatom selected from N, O, and S;
$R_4$ is hydrogen or $(C_1\text{-}C_{20})$alkyl;
X is O or S;
Z is $(C_1\text{-}C_{20})$alkyl, $-N(R_{11}R_{12})$, or $-O(R_{13})$; $R_{11}$ to $R_{13}$ each are independently of one another selected from hydrogen and $(C_1\text{-}C_{20})$alkyl; and $R_{11}$ and $R_{12}$ may be linked to each other via substituted or unsubstituted $(C_3\text{-}C_{20})$alkylene or substituted or unsubstituted $(C_3\text{-}C_{20})$alkenylene, containing or not containing a fusion ring, to thereby form an alicyclic ring, or a monocyclic or polycyclic aromatic ring; and the carbon atom of the said alicyclic ring, or the said monocyclic or polycyclic aromatic ring may be substituted by at least one heteroatom selected from nitrogen, oxygen, and sulfur;
n is an integer of 0 to 3;
$A_1$ and $A_2$ each are independently $CR_7$ or N;
$A_3$ is O, S, or $NR_8$, and $R_8$ is hydrogen or $(C_1\text{-}C_{20})$alkyl;
Y is selected from hydrogen, $-N(R_{31}R_{32})$, $-O(R_{33})$, $-S(R_{34})$, and $-P{=}O(R_{35})(R_{36})$, and $R_{31}$ to $R_{36}$ each are independently hydrogen or $(C_1\text{-}C_{20})$alkyl; and
$R_{21}$ to $R_{24}$ and $R_7$ are selected from hydrogen, halogen, Q, $(C_1\text{-}C_{20})$alkyl, $(C_3\text{-}C_{20})$cycloalkyl, $(C_1\text{-}C_{20})$alkoxy, $(C_6\text{-}C_{20})$aryloxy, $(C_1\text{-}C_{20})$alkylacyl, $(C_6\text{-}C_{20})$arylacyl, $(C_1\text{-}C_{20})$alkoxycarbonyl, $(C_6\text{-}C_{20})$aryloxycarbonyl, $(C_1\text{-}C_{20})$alkylacyloxy, $(C_6\text{-}C_{20})$arylacyloxy, sulfonylamino, hydroxy, cyano, amino, acylamino, and 5- to 7- membered heterocycloalkyl containing at least one element selected from N, O, and S.

**4.** The optical film of claim 1, wherein the compound of Chemical Formula 1 is a cellulose acetate film selected from the structures below:

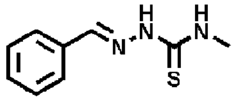 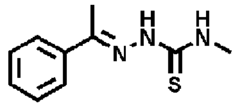 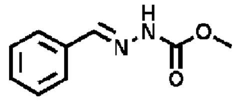 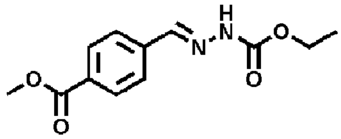

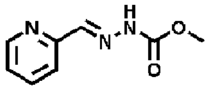 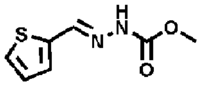 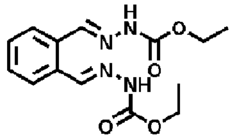 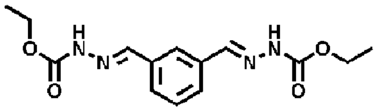

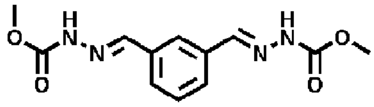 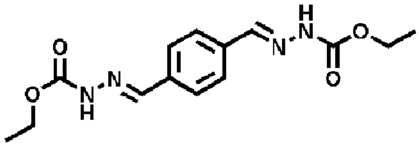 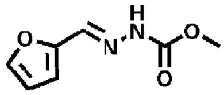

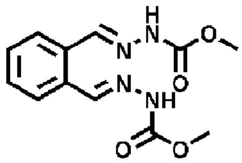 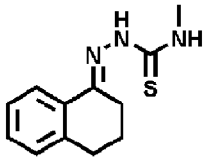 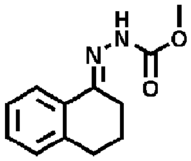 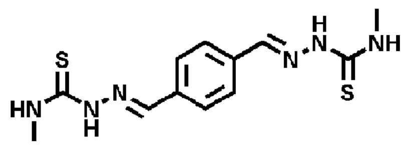

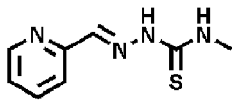 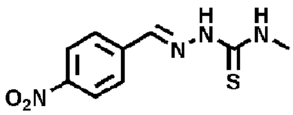 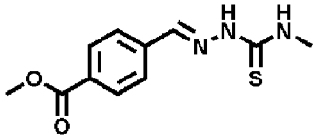 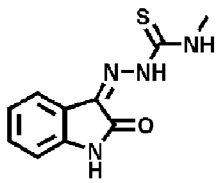

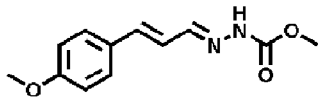 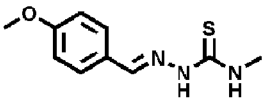 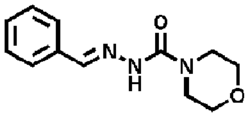 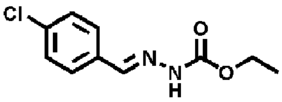

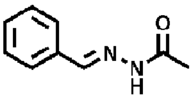 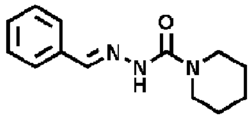 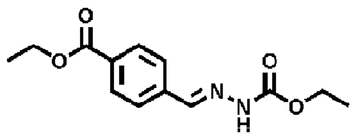 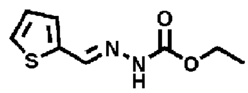

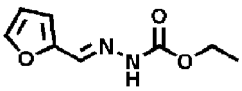 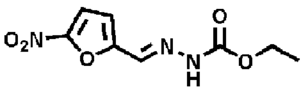 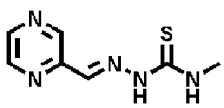 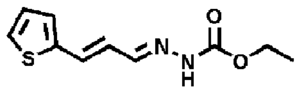

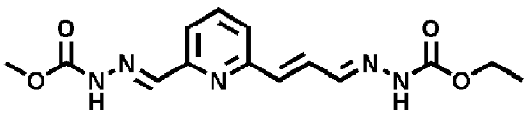 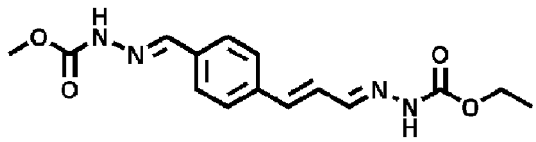

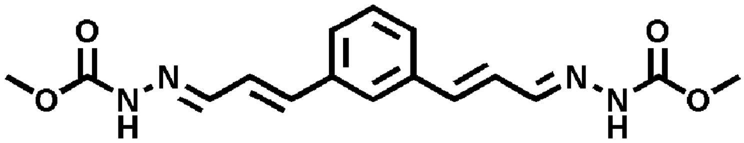

**5.** The optical film of claim 1, wherein it has Rth(λ) satisfying Formulas (I) and (II) below:

$$\text{(I)}\quad 50 \leq Rth(550) \leq 500$$

(II) Rth(700)/Rth(550) > 1.0

(In Formulas above, Rth(λ) is a retardation value (unit: nm) in a thickness direction of the film at a wavelength, λnm.)

**6.** The optical film of any one of claims 1 to 5, wherein it is a cellulose acetate film.

**7.** A composition for an optical film, comprising as a retardation additive, at least one selected from the compounds of Chemical Formula 1 below in 1-15 parts by weight based on 100 parts by weight of a base resin:

[Chemical Formula 1]

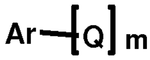

in Chemical Formula 1,

Ar is $(C_6-C_{20})$aryl or $(C_3-C_{20})$heteroaryl, provided that the compound in which OR (wherein R is hydrogen or $(C_1-C_{20})$alkyl) is substituted in ortho position of Q is excluded;
Q is

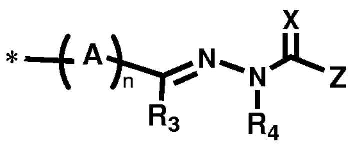
;

A is

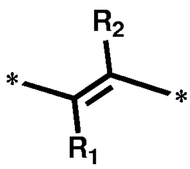
or
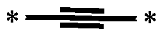
,

and $R_1$ and $R_2$ each are independently hydrogen, halogen, hydroxy, $(C_1-C_{20})$alkyl, or $(C_3-C_{20})$heterocycloalkyl;
$R_3$ is hydrogen, halogen, hydroxy, $(C_1-C_{20})$alkyl, $(C_1-C_{20})$alkylcarbonyl, or $(C_3-C_{20})$heterocycloalkyl; $R_3$ and Ar may be linked to each other via substituted or unsubstituted $(C_3-C_{20})$alkylene or substituted or unsubstituted $(C_3-C_{20})$alkenylene, containing or not containing a fusion ring, to thereby form an alicyclic ring, or a monocyclic or polycyclic aromatic ring; and the carbon atom of the said alicyclic ring, or the said monocyclic or polycyclic aromatic ring may be substituted by at least one heteroatom selected from N, O, and S;
$R_4$ is hydrogen or $(C_1-C_{20})$alkyl;
X is O or S;
Z is $(C_1-C_{20})$alkyl, $-N(R_{11}R_{12})$, or $-O(R_{13})$; $R_{11}$ to $R_{13}$ each are independently of one another selected from hydrogen and $(C_1-C_{20})$alkyl; and $R_{11}$ and $R_{12}$ may be linked to each other via substituted or unsubstituted $(C_3-C_{20})$alkylene or substituted or unsubstituted $(C_3-C_{20})$alkenylene, containing or not containing a fusion ring, to thereby form an alicyclic ring, or a monocyclic or polycyclic aromatic ring; and the carbon atom of the said alicyclic ring, or the said monocyclic or polycyclic aromatic ring may be substituted by at least one heteroatom selected from N, O, and S;
n is an integer of 0 to 3;
m is an integer of 1 to 10; and
aforementioned alkyl and heterocycloalkyl of $R_1$ to $R_3$, alkyl of $R_4$, alkyl of Z, alkyl of $R_{11}$ to $R_{13}$, and the alicyclic ring or aromatic ring of Z and $R_3$ each are independently of one another further substituted with at least one selected from halogen, nitro, cyano, hydroxy, amino, $(C_1-C_{20})$alkyl, $(C_1-C_{20})$alkoxy, $(C_2-C_{20})$alkenyl, $(C_3-C_{20})$cy-

cloalkyl, and 5- to 7- membered heterocycloalkyl containing at least one element selected from N, O, and S.

**8.** The composition of claim 7, further comprising one or two or more additives selected from the group consisting of a UV inhibitor, a particle, a plasticizer, a deterioration inhibitor, a stripping agent, an infrared absorber, and an optically anisotropic controller.

**9.** An optical film manufactured by using the composition for an optical film of claim 7 or 8.

**10.** The optical film of any one of claims 1 to 5, wherein it is used in an optical compensation sheet, an optical filter for a three dimensional image, a polarizing plate, and a liquid crystal display.

**11.** A display device comprising the optical film of any one of claims 1 to 5.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 20080173215 A
- KR 20110075980
- US 20100208181 A